# DEMANDE DE BREVET EUROPEEN

(11) **EP 3 907 091 A1**
(43) Date de publication de la demande: **10.11.2021**
(21) Numéro de dépôt: 21171806.9
(22) Date de dépôt: 03.05.2021
(51) Int. Cl.: B60G 11/54, F16F 1/12, B60G 11/16

(54) **SYSTÈME D'APPUI POUR RESSORT, NOTAMMENT À SPIRES JOINTIVES**

(30) Priorité: 06.05.2020 FR 2004510
(71) Demandeur: RENAULT s.a.s., 92100 Boulogne-Billancourt (FR)
(72) Inventeur: DUFFAU, Benjamin, 78960 VOISINS LE BRETONNEUX (FR); QILAFKU, GENTI, 92340 BOURG LA REINE (FR)

(57) **Abrégé**

Ce système d'appui pour ressort (2) comporte une partie annulaire (6) destinée à être fixée à l'une des deux extrémités du ressort (2) et un cône de centrage (7) emboitable dans ladite partie annulaire (6) et comprenant des moyens de fixation (16) sur un support extérieur (4).

## Description

### Domaine technique

L'invention concerne les suspensions de véhicules automobiles et concerne plus particulièrement le montage de ressorts de suspension de véhicules automobiles.

Une application particulièrement intéressante de l'invention concerne le montage de ressorts à spires jointives nécessitant un indexage du ressort sur ses appuis, dans des applications dans lesquelles le ressort n'est pas placé orthogonalement à ses supports supérieurs et inférieurs. Ce type de montage est utilisé dans les suspensions de train arrière de véhicules automobiles.

Toutefois, l'invention s'applique également à tout autre système de montage industriel nécessitant l'insertion d'un ressort entre deux supports non parallèles.

### Techniques antérieures

Un système de suspension d'un train de véhicule automobile est en général fixé entre le train et la caisse du véhicule. La pièce permettant la suspension peut comporter un ressort.

Le montage du ressort de suspension au sein du système de suspension nécessite que les ressorts et leurs appuis ne tombent pas lors de l'assemblage. Ils doivent être mis en place pendant que le train est ouvert. Une fois le montage effectué, le train est refermé jusqu'à la compression partielle du ressort mis en place.

Dans le cas d'un système de suspension à ressort, ces étapes sont effectuées par un opérateur qui place le ressort sur un appui de centrage puis active la compression du train.

L'appui de centrage est nécessaire car le ressort n'est pas encore en butée sur l'appui lorsque le train est ouvert. Ce dernier sert donc de guide au ressort lors de la fermeture du train. Des problèmes peuvent se poser pour l'indexation du ressort.

Dans le cas d'un train nécessitant l'utilisation d'un ressort et l'indexation en rotation du ressort dans une position précise, il est nécessaire pour l'opérateur de compresser au préalable le ressort et ses appuis à l'aide d'une machine afin de les introduire entre le train et la caisse.

Cette étape représente un temps de cycle long, l'usage couteux et volumineux d'une machine pour compresser le ressort au préalable, et présente un risque pour la sécurité de l'opérateur.

### Exposé de l'invention

La présente invention a donc pour but de palier les inconvénients du système précité et de proposer un système d'appui pour ressort répondant aux impératifs de montage dans des environnements industriels.

L'invention a donc pour objet un système d'appui pour ressort de suspension de véhicule automobile comportant une partie annulaire destinée à être fixée à l'une des deux extrémités du ressort et un cône de centrage distinct emboitable dans ladite partie annulaire et ledit cône comprenant des moyens de fixation adaptés à la fixation sur un support extérieur.

Ainsi, ce système d'appui permet de ne pas effectuer de compression préalable du ressort en privilégiant un système d'appui du ressort en deux parties. La partie annulaire est en contact direct avec le ressort et le cône de centrage est, dans un premier temps, situé entièrement au centre de la partie annulaire afin d'introduire le ressort entre le train et la caisse. Dans un deuxième temps, une fois les extrémités du ressort et leur appui alignés avec les supports, une partie du cône de centrage sort de la partie annulaire et dépasse afin d'aller se fixer sur le support. Le cône sert ainsi de guide à la partie annulaire et au ressort lors de la fermeture du train.

Le système d'appui permet en outre de fixer le ressort et de l'indexer selon une position spécifique nécessaire lors de l'usage d'un ressort.

Avantageusement, le cône de centrage, dans sa position emboîtée dans la partie annulaire, comprend une base située à la hauteur de la partie externe de la partie annulaire et une face supérieure de cône orientée vers l'intérieur du ressort lorsque le système d'appui est fixé au ressort.

Ainsi, durant le montage du ressort entre le train et la caisse, aucun élément du système d'appui ne dépasse et l'insertion du ressort s'effectue simplement sans avoir à le compresser.

Avantageusement, le cône de centrage comprend des panneaux radiaux situés à l'intérieur de la face supérieure de cône, la face supérieure des panneaux radiaux étant en contact avec la partie annulaire lorsque la base est fixée à un support extérieur.

Ainsi, une fois le ressort placé dans le bon alignement et une fois le cône partiellement sorti de la partie annulaire et fixé à un support supérieur par sa base, la face supérieure du cône est toujours située dans la partie annulaire et permet d'assurer la fonction de guidage pour la partie annulaire et le ressort lorsque le train se referme en fin de montage.

Une fois le train refermé, le ressort est partiellement comprimé et la partie annulaire contient à nouveau intégralement le cône de centrage en son centre. La forme conique de l'élément de centrage permet au système d'appui de ne plus se désolidariser lors de l'usage courant de la suspension.

Avantageusement, les moyens de fixation du cône de centrage au support supérieur sont situés à l'intérieur d'une cavité sensiblement centrale et sensiblement de forme cylindrique aménagée depuis la base du cône et comprennent des moyens de fixation par clipsage.

Ainsi, une simple action de pression de l'opérateur sur le cône au centre de la partie annulaire permet de le déplacer jusqu'au clipsage sur le support.

Avantageusement, la partie annulaire et le cône de centrage sont réalisés en matière plastique ou en caoutchouc.

L'invention a également pour objet un système de suspension de véhicule automobile comprenant un système d'appui pour ressort tel que défini ci-dessus, et un ressort.

Avantageusement, le système de suspension de véhicule automobile comprend un ressort présentant des spires susceptibles d'être de type à spires jointives.

L'invention a pour objet un essieu de véhicule automobile, caractérisé en ce qu'il comprend au moins un système de suspension selon l'invention.

De plus, l'invention a pour objet un procédé de mise en place d'un ressort et d'un système d'appui pour ressort de la suspension d'un véhicule automobile comportant une partie annulaire destinée à être fixée à l'une des deux extrémités du ressort et un cône de centrage distinct emboitable dans ladite partie annulaire et ledit cône comprenant des moyens de fixation adaptés à la fixation sur un support extérieur, ledit procédé comportant la fourniture dudit système d'appui et les étapes suivantes :
- Fixation du système d'appui sur l'une des extrémités du ressort, système d'appui dont les deux parties sont emboîtées ;
- Introduction, dans le système de suspension ouvert du véhicule, du ressort sur lequel est fixé le système d'appui dont les deux parties sont emboîtées ;
- Alignement des extrémités du ressort en regard de leur emplacement dans le système de suspension ;
- Désolidarisation du cône de centrage vis-à-vis de la partie annulaire par poussée mécanique sur la face supérieure du cône ;
- Centrage du cône sur le support et fixation du cône sur le support ; et
- Solidarisation du cône et de la partie annulaire par fermeture du système de suspension du véhicule.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] est une vue partielle d'un train arrière de véhicule automobile doté d'un système de suspension selon l'invention ;
[Fig 2] illustre un système d'appui pour ressort selon l'invention ;
[Fig 3A] illustre une vue éclatée du système d'appui de la figure 2 lorsque le cône de centrage et la partie annulaire sont séparés ;
[Fig 3B] illustre le système d'appui selon l'invention lorsque le cône de centrage est introduit dans la partie annulaire ;
[Fig 3C] illustre la partie du système d'appui selon l'invention destinée à être en contact avec un support extérieur ;
[Fig 4A]
   et
[Fig 4B]
   et

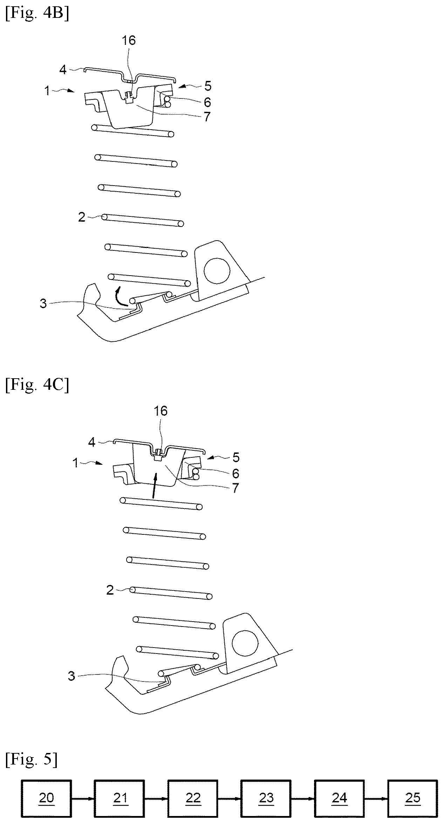

[Fig 4C] sont respectivement des vues en coupe de profil du ressort et de ses appuis inférieurs et supérieurs lors d'une première, une seconde et une troisième étape de montage ; et
[Fig 5] illustre le procédé selon l'invention.

### Exposé détaillé d'au moins un mode de réalisation

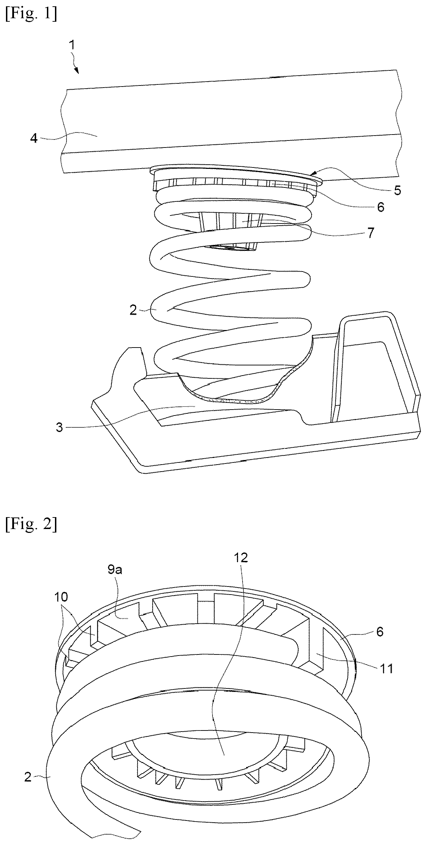

Sur la figure 1 est représenté en perspective en position supposée verticale d'utilisation, un élément de système de suspension arrière 1 de véhicule automobile, comprenant un ressort 2 contraint entre un support inférieur 3 lié au train du véhicule, et un support supérieur 4 lié à la caisse.

Dans un mode de mise en œuvre, tel qu'illustré à la figure 2, le ressort 2 est un ressort à spires jointives. En effet, l'extrémité supérieure du ressort liée au support supérieur comprend plusieurs spires les unes au contact des autres lorsque le ressort est contraint.

Bien entendu, l'invention s'applique également à tout autre type de ressort nécessitant ou non une indexation.

L'appui du ressort sur le support supérieur 4 s'effectue à l'aide d'un système d'appui 5.

Par exemple, le système d'appui 5 peut être injecté en matière plastique ou en caoutchouc.

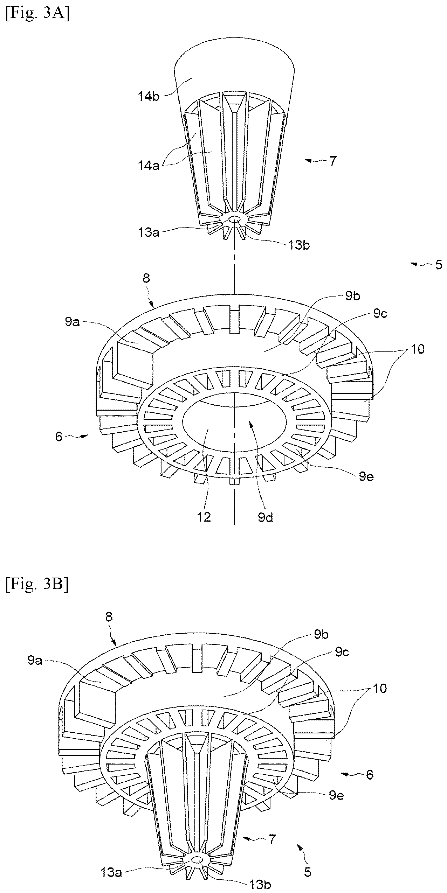

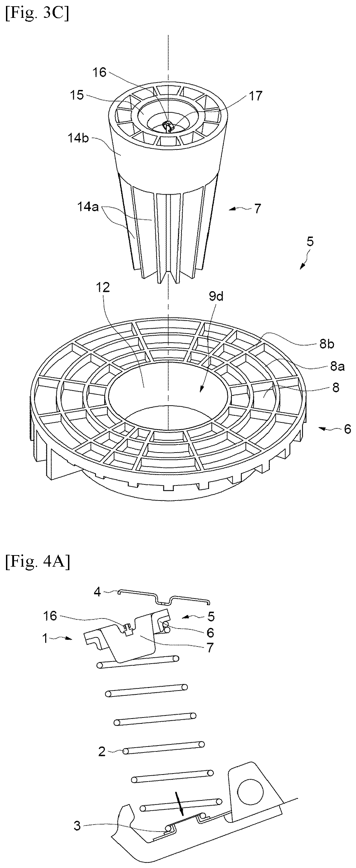

Le système d'appui 5 comprend une première partie 6 annulaire et une deuxième partie 7 tronconique, visibles figures 3A, 3B et 3C, fabriquées par moulage et pouvant s'emboîter durant le processus de montage du ressort 2, facilitant l'insertion de la suspension 1 entre le train 3 et la caisse 4 puis sa fixation.

La première partie 6 du système d'appui 5 constitue une butée annulaire axiale pour le ressort à spires jointives 2. Elle présente un diamètre extérieur similaire à celui du ressort 2 et un diamètre intérieur environ deux fois moindre. Elle comprend une face supérieure délimitant un plateau 8 supérieur alvéolé comprenant un ensemble de cercles concentriques 8a et des nervures radiales 8b destinés à être placés au contact du support supérieur 4.

La face inférieure de la partie annulaire comprend une piste hélicoïdale 9a périphérique formée par une succession de dents 10 de hauteur croissante destinées à épouser la forme de la spire d'extrémité supérieure du ressort 2. Les dents 10 sont venues de matière avec le reste de la partie annulaire. La première dent a une hauteur de quelques millimètres et les suivantes ont une hauteur qui augmente graduellement jusqu'à une hauteur supérieure à celle d'une spire afin de créer une rampe adaptée à la forme et la rotation d'une spire.

Sur la figure 2 est représentée la plus haute dent 11 qui, en plus de constituer la dernière dent de la rampe, fait office de butée d'indexation 11 du ressort 2 afin que celui-ci ne puisse pas tourner sur lui-même.

La face inférieure de la première partie 6 du système d'appui comprend par ailleurs une jupe cylindrique 9b s'étendant axialement à partir de la périphérie interne de la piste hélicoïdale. Cette jupe est également alvéolée et est de même largeur que la piste hélicoïdale 9a et de hauteur environ égale à celle d'une spire du ressort 2. Tel que représentée, la jupe cylindrique comporte une surface distale plane 9c et est dotée d'un passage axial 9d et d'un ensemble de trous radiaux 9e divergents régulièrement répartis dans la surface distale.

Le centre de la jupe cylindrique 9b est vide et comprend une paroi intérieure 12 droite ou tronconique de forme complémentaire de celle de la seconde partie conique 7 du système d'appui 5 qui s'emboite dans la première partie et qui permet d'effectuer un centrage entre le cône 7 et la partie annulaire 6.

La seconde partie du système d'appui 5 comporte un cône de centrage 7 dont la face supérieure 13a est plane afin de constituer une surface d'appui pour l'opérateur et dont le diamètre de la base est du même ordre, légèrement inférieur au diamètre du passage axial de la première partie annulaire 6. Le cône de centrage 7 comprend des panneaux radiaux 14a répartis régulièrement autour d'un noyau axial 13b et reliant le haut 13a à une paroi lisse 14b placée sur le tiers inférieur du cône. Dans un mode de réalisation, la paroi 14b du cône a également une inclinaison similaire et complémentaire à celle de la paroi interne 12 de la partie annulaire 6 de sorte que ces deux parties puissent s'emboîter parfaitement.

La base 15 du cône de centrage 7, également alvéolée et creuse pour accueillir une partie saillante du support 4 afin de centrer le cône 7 sur cette dernière, comprend en son centre un clip de fixation 16 ne dépassant pas de la surface de la base 15 et qui vient se fixer à la partie saillante du support extérieur 4 s'il est mis en contact avec ce dernier. La fixation s'effectue à l'aide d'ailettes 17.

Sur les figures 4A, 4B et 4C sont représentées les différentes positions du cône 7 lors du montage du système de suspension 1. Le montage comprend plusieurs étapes dont les principales sont illustrées figure 5. Le système d'appui 5 avec le cône 7 emboité dans la partie annulaire est fixé dans une étape 20 au ressort 2, la face supérieure 13a du cône étant tournée vers l'intérieur du ressort. Ce dernier, équipé du système d'appui est introduit entre le train 3 et le support supérieur 4 de la caisse durant l'étape 21. Puis la partie supérieure du ressort 2 est basculée pour aligner le clip de fixation 16 du cône 7 en regard de son complémentaire du support supérieur 4 (figure 4B) durant l'étape 22. Ensuite, le cône 7 du système d'appui est désolidarisé (étape 23) de la partie annulaire 6 par une poussée mécanique effectuée par l'opérateur, à la main ou avec un outillage, sur la face supérieure du cône, cette dernière étant le sommet du cône. L'opérateur continue son mouvement jusqu'à déplacer le cône 7 jusqu'au support 4 et jusqu'à engager le clipsage (étape 24) sur ce dernier. Le renfoncement dans la base 15 du cône accueille une partie saillante du support 4 pratiquée autour de la fixation ce qui permet de centrer le cône sur le support 4 avant sa fixation. Le cône 7 permet le centrage du ressort lors de la fermeture du train 3 du système de suspension en fin de montage par coulissement du ressort 2 sur le cône 7. Cette dernière étape 25 solidarise de nouveau le cône 7 avec la partie annulaire 6.

## Revendications

1. Système d'appui (5) pour ressort de suspension de véhicule automobile, **caractérisé en ce qu'**il comporte une partie annulaire (6) destinée à être fixée à l'une des deux extrémités du ressort (2) et un cône de centrage (7) distinct emboitable dans ladite partie annulaire (6) et ledit cône comprenant des moyens de fixation (16) adaptés à la fixation sur un support extérieur (4).

2. Système d'appui pour ressort (2) selon la revendication 1, dans lequel le cône de centrage (7), dans sa position emboîtée dans la partie annulaire (6), comprend une base (15) située à la hauteur de la partie externe de la partie annulaire (6) et une face supérieure de cône (13a) orientée vers l'intérieur du ressort (2) lorsque le système d'appui est fixé au ressort (2).

3. Système d'appui pour ressort (2) selon la revendication 2, dans lequel le cône de centrage (7) comprend des panneaux radiaux (14a) situés à l'intérieur de la face supérieure de cône, la face supérieure des panneaux radiaux étant en contact avec la partie annulaire (6) lorsque la base (15) est fixée à un support supérieur (4).

4. Système d'appui pour ressort (2) selon l'une des revendications 2 à 3, dans lequel les moyens de fixation (16) du cône de centrage (7) au support supérieur (4) sont situés à l'intérieur d'une cavité sensiblement centrale aménagée depuis la base (15) du cône et comprennent des moyens de fixation par clipsage.

5. Système d'appui pour ressort (2) selon l'une des revendications 1 à 4, dans lequel la partie annulaire (6) et le cône de centrage (7) sont réalisés en matière plastique ou en caoutchouc.

6. Système de suspension d'un véhicule automobile, **caractérisé en ce qu'**il comprend un système d'appui (5) pour ressort (2) selon l'une quelconque des revendications 1 à 5 et un ressort (2).

7. Système de suspension d'un véhicule automobile selon la revendication 6, **caractérisé en ce qu'**il comprend un ressort présentant des spires susceptibles d'être de type à spires jointives.

8. Essieu de véhicule automobile, **caractérisé en ce qu'**il comprend au moins un système de suspension selon la revendication 7.

9. Procédé de mise en place d'un ressort (2) et d'un système d'appui (5) pour ressort (2) de suspension d'un véhicule automobile comportant une partie annulaire (6) destinée à être fixée à l'une des deux extrémités du ressort (2) et un cône de centrage (7) distinct emboitable dans ladite partie annulaire (6) et ledit cône (7) comprenant des moyens de fixation (16) adaptés à la fixation sur un support extérieur (4), **caractérisé en ce qu'**il comporte la fourniture dudit système d'appui et les étapes suivantes :
- Fixation (20) du système d'appui sur l'une des extrémités du ressort (2), système d'appui dont les deux parties (6 ; 7) sont emboîtées ;
- Introduction (21), dans le système de suspension ouvert du véhicule, du ressort (2) sur lequel est fixé le système d'appui dont les deux parties (6 ; 7) sont emboîtées ;
- Alignement (22) des extrémités du ressort (2) en regard de leur emplacement (3 ; 4) dans le système de suspension ;
- Désolidarisation (23) du cône de centrage (7) vis-à-vis de la partie annulaire (6) par poussée mécanique sur la face supérieure (13a) du cône ;
- Centrage du cône (7) sur le support (4) et fixation (24) du cône sur le support 4 ; et
- Solidarisation (25) du cône (7) et de la partie annulaire (6) par fermeture du système de suspension du véhicule.
